# EUROPÄISCHE PATENTSCHRIFT

(11) **EP 3 314 412 B1**
(45) Veröffentlichungstag und Bekanntmachung des Hinweises auf die Patenterteilung: **19.08.2020**
(21) Anmeldenummer: 16744654.1
(22) Anmeldetag: 16.06.2016
(51) Int. Cl.: G06F 8/70

(54) **VERFAHREN ZUM DEBUGGING VON SOFTWAREKOMPONENTEN IN EINEM VERTEILTEN ZEITGESTEUERTEN ECHTZEITSYSTEM**
METHOD FOR DEBUGGING SOFTWARE COMPONENTS IN A DISTRIBUTED, TIME-CONTROLLED REAL TIME SYSTEM
PROCÉDÉ DE DÉBOGAGE DE COMPOSANTS LOGICIELS DANS UN SYSTÈME EN TEMPS RÉEL COMMANDÉ DANS LE TEMPS DISTRIBUÉ

(30) Priorität: 25.06.2015 AT 505502015
(43) Veröffentlichungstag der Anmeldung: 02.05.2018
(73) Patentinhaber: TTTech Auto AG, 1040 Wien (AT)
(72) Erfinder: KOPETZ, Hermann, 2500 Baden (AT); POLEDNA, Stefan, 3400 Klosterneuburg (AT)
(74) Vertreter: Patentanwaltskanzlei Matschnig & Forsthuber OG
(86) Internationale Anmeldenummer: PCT/AT2016/050207
(87) Internationale Veröffentlichungsnummer: WO 2016/205841

(56) Entgegenhaltungen:
- Hermann Kopetz: "Real-Time Systems - Design Principles for Distributed Embedded Applications", REAL-TIME SYSTEMS: Design Principles for Distributed Embedded Applications, 1. Januar 2002 (2002-01-01), Seiten 1-338, XP055314503, Boston, Mass, US. ISBN: 978-0-7923-9894-3 Gefunden im Internet: URL:https://alok007.files.wordpress.com/20 10/11/19066839-real-time-embedded-systems. pdf [gefunden am 2016-10-27]

## Beschreibung

Die Erfindung betrifft ein Verfahren zum *Debugging von Software-Komponenten* eines verteilten Echtzeitsoftwaresystems, wobei die Zielhardware Rechnerknoten umfasst und das Entwicklungssystem einen oder mehrere Computer umfasst.

Ein solches Verfahren ist zum Beispiel in Hermann Kopetz: "Real-Time Systems - Design Principles for Distributed Embedded Applications", 1997, Seite 256, Abb. 12.4 beschrieben.

Im Rahmen des Architekturentwurfs eines großen Echtzeitsystems wird eine gegebene Aufgabenstellung in eine Anzahl von Software-Komponenten unterteilt. Eine ***Softwarekomponente*** ist ein Teil eines Softwaresystems, der mit anderen Teilen des Softwaresystems (anderen Softwarekomponenten) über spezifizierte Schnittstellen Daten und Kontrollsignale austauscht. In Rahmen des Architekturentwurfs wird für jede Softwarekomponente eine funktionale Spezifikation erstellt.

Eine ***Funktionale Spezifikation einer Softwarekomponente*** beschreibt die Syntax und die Semantik der Eingabedaten, der Ausgabedaten und des inneren Zustandes der Softwarekomponente, sowie den ***Verarbeitungsalgorithmus*** der festlegt, wie aus den Eingabedaten und dem anfänglichen inneren Zustand die Ausgabedaten und der nächstefolgende innere Zustand zu errechnen ist.

Bei einem großen Projekt entwickeln eigenständige Projektteams aus der funktionalen Spezifikation jeder Softwarekomponente den Programmcode für die entsprechende Softwarekomponente. Die Programmentwicklung erfolgt normalerweise auf einem ***Entwicklungssystem,*** das komfortable Werkzeuge zum Testen und Debugging des Programmcodes unterstützt. Um die Programmentwicklung zu erleichtern, unterstützt das *Entwicklungssystem* normalerweise mehr Funktionen als die Zielhardware, z.B. zusätzliche Funktionen zur interaktiven Simulation des Ablaufs der Programme.

Wir bezeichnen die Ausführung einer Softwarekomponente auf dem *Entwicklungssystem,* z.B. auf einem Personal Computer des *Entwicklungssystems,* als ***Simulationsprozess.***

Wir bezeichnen die Version einer Softwarekomponente, die auf der Zielhardware die geforderten Echtzeitschranken einzuhalten hat, als *Echtzeitversion einer Softwarekomponente.* Unter dem Begriff ***Zielhardware*** wird die verteilte Hardwareumgebung, die in einem geplanten Produkt zum Einsatz kommt, verstanden.

Wir bezeichnen die *Ausführung der Echtzeitversion einer Softwarekomponente* auf der Zielhardware als ***operativen Prozess.*** In einem Echtzeitsystem müssen die operativen Prozesse nicht nur die Vorgaben der funktionalen Spezifikationen sondern auch die durch die Aufgabenstellung vorgegebenen Echtzeitschranken erfüllen. Die ***Verarbeitungsdauer*** eines operativen Prozesses auf der Zielhardware hängt von der Leistungsfähigkeit dieser Hardware ab.

In einem zeitgesteuerten Echtzeitsystem werden die Softwarekomponenten ***periodisch*** aktiviert, wobei der Datenfluss zwischen den Softwarekomponenten mit periodischen zeitgesteuerten TT-Nachrichten (TT, "time-triggered") realisiert wird. In [1] wird der Aufbau eines solchen periodischen Systems beschrieben und es wird erklärt, wie die ***Verarbeitungsdauer eines operativen Prozesses*** auf der Zielhardware und die ***Transportzeiten der TT-Nachrichten,*** die auf der Zielhardware zwischen den Softwarekomponenten ausgetauscht werden, ermittelt werden können.

In der Echtzeitdatenverarbeitung ist ein ***Frame*** ein sich zeitlich wiederholender Abschnitt auf der Zeitachse, während dessen ein periodischer Prozess von einem Computer ausgeführt wird.

Ein ***Verarbeitungsframe*** beginnt mit dem Lesen der Eingabedaten und des inneren Zustandes eines Prozesses und endet mit der Produktion der Ausgabedaten und eines neuen inneren Zustand.

Ein ***Kommunikationsframe*** beginnt mit dem Start des Sendens einer Nachricht beim sendenden Prozess und endet mit der Fertigstellung des Nachrichtentransports beim empfangenden Prozess.

Im Rahmen des Debugging einer Softwarekomponente müssen Entwurfsfehler *innerhalb* einer Softwarekomponente lokalisiert und behoben werden. Wenn im Rahmen des Testens einer Softwarekomponente mit konkreten Eingabedaten die Endergebnisse der Softwarekomponente nicht den gegebenen Anforderungen im Werte oder Zeitbereich entsprechen und somit als fehlerhaft erkannt worden sind, so sind Zwischenergebnissen innerhalb der Komponente zu überprüfen, um feststellen zu können, welche fehlerhaften Softwarebefehle die Ursache für den beobachteten Fehler in den Endergebnisse der Softwarekomponente sind. Um diese Überprüfung der Zwischenergebnisse zu ermöglichen, muss die Softwarekomponente mit *Debugging-Hilfen* erweitert werden.

Aus der Fachliteratur ist eine Vielzahl von Debugging Hilfen bekannt [4]: das Setzen von Haltepunkten innerhalbe der Softwarekomponente, um den augenblicklichen Wert von Variablen überprüfen zu können, die Ausgabe von Zwischenergebnisse wichtiger Variablen auf einen externen Datenspeicher, oder das Setzen von Boolschen Bedingungen zwischen Variablen, die bei einer korrekten Programmausführung erfüllt sein müssen.

Die Erweiterung einer Softwarekomponente mit Debugging-Hilfen verändert das Laufzeitverhalten einer Softwarekomponente. In Echtzeitsystemen kann dieses geänderte Laufzeitverhalten eine Ursache für einen auftretenden Fehler sein.

Es ist eine Aufgabe der vorliegenden Erfindung, eine Lösung für dieses Problem anzugeben.

Diese Aufgabe wird mit einem eingangs erwähnten Verfahren dadurch gelöst, dass erfindungsgemäß ein erweitertes Entwicklungssystem gebildet wird, bei welchem erweiterten Entwicklungssystem die Rechnerknoten der Zielhardware mit den Computern des Entwicklungssystems über eine oder mehrere zeitgesteuerte Verteilereinheiten verbunden sind, wobei das erweiterte Entwicklungssystem eine sparse globale Zeit von bekannter Präzision hat,

wobei die Rechnerknoten der Zielhardware mit den Computern des Entwicklungssystems über eine oder mehrere Verteilereinheiten Nachrichten austauschen, und wobei in einem Frame eine Softwarekomponente auf der Zielhardware und zeitlich parallel dazu im Entwicklungssystem mit den gleichen Eingabedaten versorgt und zur Ausführung gebracht werden, wobei die Aktivierungssignale zum Start der beiden Ausführungen der Softwarekomponente beim *gleichen sparse Tick* der globalen Zeit ausgelöst werden, und wobei die im Entwicklungssystem ausgeführte Softwarekomponente derart erweitert ist, dass während ihrer Exekution ausgewählte Zwischenergebnisse auf einen externen Datenspeicher geschrieben werden.

Es wird vorgeschlagen, in einem verteilten Echtzeitsystem zwei Versionen einer Softwarekomponente gleichzeitig mit den gleichen Eingabedaten auszuführen, eine *Echtzeitversion einer Softwarekomponente* auf der Zielhardware und eine *erweiterte Simulationsversion einer Softwarekomponente* auf dem Entwicklungssystem.

Beispielsweise ist im Rahmen eines Feldtests der Software eines Fahrzeugs das Verhalten des Fahrzeug unter sehr unterschiedlichen Fahrverhältnissen (z.B. trockene, nasse Straßen, Eis, Schnee) im Echtzeitbetrieb zu testen. Tritt während eines solchen Feldtests ein Fehler auf, so ist festzustellen, welcher Programmierfehler innerhalb einer Komponente die Ursache für diesen Fehlers ist. Hier tritt ein Dilemma auf: Um die Ursache des Fehlers innerhalb einer Komponente zu finden, ist eine Komponente mit Debugging Hilfen auszustatten. Diese Debugging Hilfen ändern das Echtzeitverhalten der Komponente. Mithilfe der vorliegenden Erfindung kann z.B. dieses Problem beseitigt werden.

Ein Entwicklungssystem, das um die Zielhardware erweitert wird und in welchem Nachrichten zwischen dem Entwicklungssystem und der Zielhardware unter Einhaltung gegebener Echtzeitschranken ausgetauscht werden können, wird als ***erweitertes Entwicklungssystem*** bezeichnet.

Von Vorteil kann es sein, wenn die Ergebnisse der Ausführung der *Echtzeitversion einer Softwarekomponente* zu einem nachgelagerten Prozess auf der Zielhardware und parallel dazu über eine Verteilereinheit zum Entwicklungssystem transportiert werden.

Es kann günstig sein, wenn ein Prozess im Entwicklungssystem überprüft, ob die Ergebnisse der Ausführung der *Echtzeitversion einer Softwarekomponente* den gegebenen Anforderungen entspricht, und bei Feststellung eines Fehlers eine Fehlermeldung produziert.

Es kann zweckmäßig sein, wenn ein Prozess im Entwicklungssystem überprüft, ob die Ergebnisse der Ausführung der *Echtzeitversion einer Softwarekomponente* identisch sind mit den Ergebnissen der zeitlich parallelen Ausführung der Softwarekomponente auf dem Entwicklungssystem, und bei Feststellung einer Abweichung der beiden Ergebnisse voneinander eine Fehlermeldung produziert.

Die *erweiterte Simulationsversion der Softwarekomponente* enthält Softwarebefehle, die neben den Eingabedaten ausgewählte Zwischenergebnisse auf einen externen Datenspeicher schreibt, um im Fehlerfall den Kontrollfluss innerhalb der Softwarekomponente nachträglich rekonstruieren zu können. Durch diese Erweiterung wird das Zeitverhalten der erweiterten *Simulationsversion der Softwarekomponente,* die auf dem Entwicklungssystem zur Ausführung gebracht wird, verändert.

Diese Veränderung des Zeitverhaltens ist für die Zielhardware ohne Bedeutung, da die *Echtzeitversion der Softwarekomponente,* die auf der Zielhardware ausgeführt wird, rechtzeitig die Ergebnisse für den weiteren Ablauf des Echtzeitsystems bereit stellt. Mit diesem Verfahren ist somit ein kontinuierlicher Testbetrieb unter Echtzeitbedingungen möglich.

Im Entwicklungssystem wird vorzugsweise ein Prozess vorgesehen, der überprüft, ob die Ergebnisse eines Testlaufs den gegebenen Anforderungen entsprechen und ob die von der Zielhardware über eine Verteilereinheit erhaltenen Ergebnisse identisch sind mit den Ergebnissen, die auf dem Entwicklungssystem errechnet wurden. Liegt ein Fehler oder eine Abweichung vor, so wird eine Fehlermeldung ausgegeben. Es ist dann möglich, auf Basis der gespeicherten Zwischenergebnisse den komponenteninternen Programmablauf dieses Testfalls im Programmcode *offline* zu verfolgen um die Fehlerursache zu finden.

Im Folgenden wird die Erfindung an Hand der Zeichnung näher erläutert. In dieser zeigt
Fig. 1 die Struktur eines beispielhaften erweiterten Entwicklungssystems, und
Fig. 2 zeigt den Aufbau einer sparse globalen Zeit.

Das folgende konkrete Beispiel behandelt eine der vielen möglichen Realisierungen der vorliegenden Erfindung.

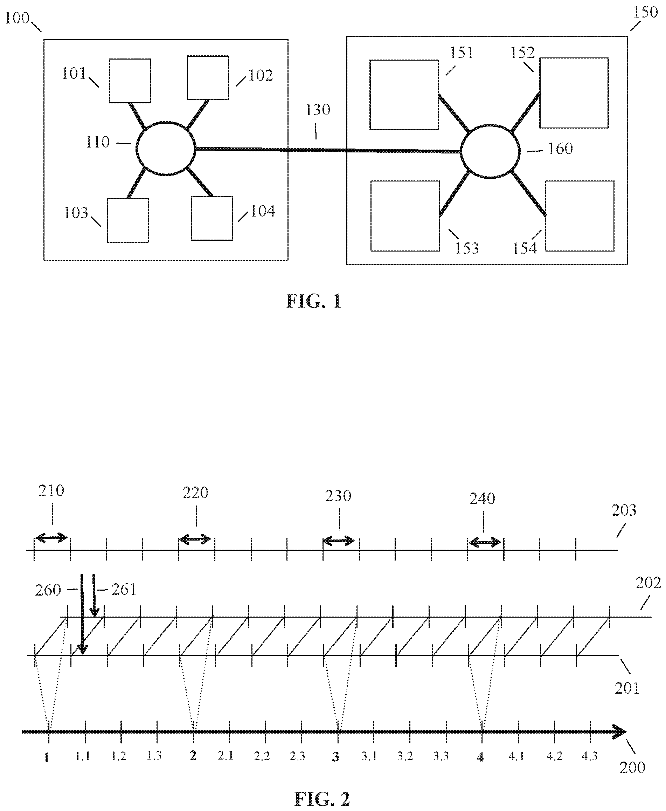

In Fig. 1 ist die Struktur eines erweiterten Entwicklungssystems dargestellt. Es besteht aus einer Zielhardware **100** und einem Entwicklungssystem **150.** Diese beiden Systeme sind über einen Kommunikationskanal **130,** auf dem zeitgesteuerte Nachrichten transportiert werden können, verbunden.

In Fig. 1 besteht die Zielhardware **100** aus vier Rechnerknoten **101, 102, 103, 104,** die über eine Verteilereinheit **110** untereinander und mit dem Entwicklungssystem **150** über den Kommunikationskanal **130** zeitgesteuerte Nachrichten austauschen können. In einem Rechnerknoten, z.B. im Rechnerknoten **101,** können von der TT Plattform von einem Hypervisor mehrere Partitionen zur Ausführung von Softwarekomponenten bereit gestellt werden.

Das in Fig. 1 dargestellte Entwicklungssystem **150** besteht aus vier Rechnern, z.B. Personal Computern, **151, 152, 153, 154,** die über eine zeitgesteuerte Verteilereinheit **160** untereinander und über den Kommunikationskanal **130** mit der Zielhardware zeitgesteuerte Nachrichten austauschen können.

Fig. 2 zeigt die Struktur der globalen Zeit. Auf der Abszisse **200** ist das Fortschreiten der globalen Zeit dargestellt. Die Querstriche auf den Linien **201** und **202** stellen die Ticks der Uhren **201** und **202** dar.

Es ist prinzipiell unmöglich, Uhren in einem verteilten System exakt zu synchronisieren. Daher können die entsprechenden Ticks von synchronisierten Uhren, die in Fig. 2 durch strichlierte Linien verbunden sind, voneinander abweichen. Diese Abweichung bezeichnet man als *Synchronisationsfehler.* Den maximalen Synchronisationsfehler der entsprechenden Ticks zweier Uhren eines Ensembles von Uhren, der vom Synchronisationsalgorithmus und der Qualität der Uhren abhängt, bezeichnet man als *Präzision* eines Uhrenensembles. Die Präzision bestimmt in der Folge die Granularität einer digitalen Zeitbasis [4]. Die Digitalisierung führt zu einem Digitalisierungsfehler, der die gleiche Größenordnung hat wie der Synchronisationsfehler.

Aufgrund des Synchronisationsfehlers und des Digitalisierungsfehlers ist es möglich, dass das Ereignis **260,** das vor dem Ereignis **261** auftritt und von der Uhr **201** den Zeitstempel 1.1 zugewiesen erhält damit einen späteren Zeitstempel aufweist als das Ereignis **260,** das von der Uhr **202** beobachtet wird und den Zeitstempel 1.0 erhält. Da 1.1 > 1.0 wird aufgrund der Zeitstempel fälschlicher Weise angenommen, dass das Ereignis **260** nach dem Ereignis **261** aufgetreten ist.

Um diese Inkonsistenz zu vermeiden, wird in dem erweiterten Entwicklungssystem eine *sparse Zeitbasis* **203** eingeführt, wo *sparse Ereignisse* nur in den Intervallen **210, 220, 230** und **240** auftreten dürfen und wo die Kennung dieser Intervalle-die globalen Zeitstempel- mit den ganzen Zahlen 1, 2, 3 und 4 vorgenommen wird. Da der zeitliche Abstand von sparse Ereignissen grösser ist als die Summe von Synchronisationsfehler und Digitalisierungsfehler, ist es möglich, die temporale Ordnung von sparse Ereignissen im verteilten System konsistent auf der Basis ihrer Zeitstempel zu bestimmen.

Ein Ereignis A ist dann und nur dann ***gleichzeitig mit*** dem Ereignis B wenn gilt
(globaler sparse Zeitstempel von A) = (globaler sparse Zeitstempel von B).

Um den kontinuierlichen Echtzeitbetrieb des erweiterten Entwicklungssystems zu ermöglichen, müssen die *erweiterten Simulationsversion der Softwarekomponente,* die auf dem Entwicklungssystem ausgeführt wird und die *Echtzeitversion der Softwarekomponente,* die auf der Zielhardware ausgeführt wird, zum gleichen Tick der globalen sparse Zeit aktiviert werden. Beiden Softwareversionen müssen die gleichen Eingabedaten zur Verfügung gestellt werden. Die *Echtzeitversion der Softwarekomponente* muss innerhalb ihres zugewiesenen Verarbeitungsframes ihr Ergebnis bereit stellen. Der Zeitpunkt der Fertigstellung des Ergebnisses der *erweiterten Simulationsversion der Softwarekomponente* ist zeitlich nicht beschränkt, das diese Ergebnisse für den weiteren Ablauf des Echtzeitsystems ohne Bedeutung sind.

Die vorliegende Erfindung ermöglicht das kontinuierliche Testen und Debuggen der Software eines großen Softwaresystems unter Echtzeitbedingungen und stellt die notwendigen Informationen bereit, um nach Erkennen eines Fehlers einer Softwarekomponente die Fehlerursache innerhalb dieser Softwarekomponente bestimmen zu können.

### Zitierte Literatur:

[1] PCT Anmeldung PCT/AT2015/050055 der Firma FTS Computertechnik GMBH v. 3.3.2015: *Verfahren zur verteilten Entwicklung von Prozessprogrammen eines verteilten Echtzeitsoftwaresystems auf einer verteilten Entwicklungshardware.*
[2] US Pat. Application 20120278790 Bates. *Collaborative Software Debugging in a Distributed System with Real-Time Variable Modification Indicators.* Published Nov 1, 2012.
[3] US Pat. Application 20030140333. Odaka et al.. Integration of Computer System Components. Published July 24, 2003.
[4] Kopetz, H.. Real-time Systems-Design Principles for Distributed Embedded Applications. Springer Verlag, 2011.

## Patentansprüche

1. Verfahren zum *Debugging von Software-Komponenten* eines verteilten Echtzeitsoftwaresystems, wobei eine Zielhardware (100) Rechnerknoten (101, 102, 103, 104) umfasst und ein Entwicklungssystem (150) einen oder mehrere Computer (151, 152, 153, 154) umfasst, wobei die Entwicklung von Programmcode für jede Software-Komponente auf dem Entwicklungssystem (150) aus einer funktionalen Spezifikation der jeweiligen Software-Komponente erfolgt, wobei die funktionale Spezifikation einer Softwarekomponente die Syntax und die Semantik der Eingabedaten, der Ausgabedaten und des inneren Zustandes der Softwarekomponente beschreibt, sowie den Verarbeitungsalgorithmus der festlegt, wie aus den Eingabedaten und dem anfänglichen inneren Zustand die Ausgabedaten und der nächste folgende innere Zustand zu errechnen ist, **dadurch gekennzeichnet, dass**
ein erweitertes Entwicklungssystem gebildet ist, bei welchem erweiterten Entwicklungssystem die Rechnerknoten (101, 102, 103, 104) der Zielhardware (100) mit den Computern (151, 152, 153, 154) des Entwicklungssystems (150) über eine oder mehrere zeitgesteuerte Verteilereinheiten (110, 160) verbunden sind, wobei das erweiterte Entwicklungssystem eine sparse globale Zeit von bekannter Präzision hat,
wobei die Rechnerknoten (101, 102,103,104) der Zielhardware (100) mit den Computern (151, 152, 153, 154) des Entwicklungssystems (150) über die zumindest eine Verteilereinheit (110, 160) Nachrichten austauschen, und wobei in einem Frame eine Echtzeitversion einer Softwarekomponente auf der Zielhardware (100) und zeitlich parallel dazu eine erweiterte Simulationsversion der Softwarekomponente auf dem Entwicklungssystem (150) mit den gleichen Eingabedaten versorgt und zur Ausführung gebracht werden, wobei Aktivierungssignale zum Start der Ausführungen der beiden Softwarekomponenten beim *gleichen sparse Tick* der globalen Zeit ausgelöst werden, und wobei die im Entwicklungssystem (150) ausgeführte erweiterte Simulationsversion der Softwarekomponente derart erweitert ist, dass während ihrer Exekution ausgewählte Zwischenergebnisse auf einen externen Datenspeicher geschrieben werden.

2. Verfahren nach Anspruch 1, **dadurch gekennzeichnet, dass** die Ergebnisse der Ausführung der *Echtzeitversion der Softwarekomponente* zu einem nachgelagerten Prozess auf der Zielhardware und parallel dazu über eine Verteilereinheit zum Entwicklungssystem transportiert werden.

3. Verfahren nach Anspruch 1 oder 2, **dadurch gekennzeichnet, dass** ein Prozess im Entwicklungssystem (150) überprüft, ob die Ergebnisse der Ausführung der *Echtzeitversion der Softwarekomponente* den gegebenen Anforderungen entspricht, und bei Feststellung eines Fehlers eine Fehlermeldung produziert.

4. Verfahren nach einem der Ansprüche 1 bis 3, **dadurch gekennzeichnet, dass** ein Prozess im Entwicklungssystem (150) überprüft, ob die Ergebnisse der Ausführung der *Echtzeitversion der Softwarekomponente* identisch sind mit den Ergebnissen der zeitlich parallelen Ausführung der erweiterten Simulationsversion der Softwarekomponente auf dem Entwicklungssystem, und bei Feststellung einer Abweichung der beiden Ergebnisse voneinander eine Fehlermeldung produziert.

## Claims

1. Method for debugging software components of a distributed real-time software system, wherein a target hardware (100) comprises computer nodes (101, 102, 103, 104) and a development system (150) comprises one or more computers (151, 152, 153, 154), wherein the development of program code for each software component on the development system (150) is based on a functional specification of the respective software component,
the functional specification of a software component describing the syntax and the semantics of the input data, the output data and the internal state of the software component, as well as the processing algorithm, which determines how to calculate the output data and the next following internal state from the input data and the initial internal state,
**characterised in that**
an extended development system is realized, wherein in said extended development system the computer nodes (101, 102, 103, 104) of the target hardware (100) are connected to the computers (151, 152, 153, 154) of the development system (150) via one or more time-controlled distribution units (110, 160), the extended development system having a sparse global time of known precision,
wherein the computer nodes (101, 102, 103, 104) of the target hardware (100) exchange messages with the computers (151, 152, 153, 154) of the development system (150) via the at least one distribution unit (110, 160), and wherein within a frame, a real-time version of a software component on the target hardware (100) and, in parallel thereto at the same time, an extended simulation version of the software component on the development system (150) are supplied with the same input data and brought to execution, wherein activation signals for starting the execution of the two software components are triggered at the same sparse tick of the global time, and wherein the extended simulation version of the software component executed in the development system (150) is extended in such a way that, during its execution, selected intermediate results are written to an external data memory.

2. Method according to claim 1, **characterised in that** the results of the execution of the real-time version of the software component are transported to a downstream process on the target hardware and in parallel thereto via a distribution unit to the development system.

3. Method according to claim 1 or 2, **characterised in that** a process in the development system (150) checks whether the results of the execution of the real-time version of the software component meet the given requirements and, if an error is detected, produces an error message.

4. Method according to one of claims 1 to 3, **characterised in that** a process in the development system (150) checks whether the results of the execution of the real-time version of the software component are identical to the results of the in-parallel execution of the extended simulation version of the software component on the development system and, if a deviation of the two results from one another is detected, produces an error message.

## Revendications

1. Procédé de débogage de composants logiciels d'un système logiciel en temps réel distribué, dans lequel un matériel cible (100) comprend des nœuds d'ordinateur (101, 102, 103, 104) et un système de développement (150) comprend un ou plusieurs ordinateurs (151, 152, 153, 154), dans lequel le développement du code de programme pour chaque composant logiciel sur le système de développement (150) est effectué à partir d'une spécification fonctionnelle du composant logiciel respectif,
dans lequel la spécification fonctionnelle d'un composant logiciel décrit la syntaxe et la sémantique des données d'entrée, des données de sortie et de l'état interne du composant logiciel ainsi que l'algorithme de traitement qui détermine comment calculer les données de sortie et l'état interne prochain suivant à partir des données d'entrée et de l'état interne initial,
**caractérisé en ce que**
un système de développement étendu est constitué, dans lequel système de développement étendu les nœuds informatiques (101, 102, 103, 104) du matériel cible (100) sont connectés aux ordinateurs (151, 152, 153, 154) du système de développement (150) via une ou plusieurs unités de distribution à commande temporelle (110, 160), ledit système de développement étendu ayant un temps global creux de précision connue,
dans lequel les nœuds informatiques (101, 102, 103, 104) du matériel cible (100) échangent des messages avec les ordinateurs (151, 152, 153, 154) du système de développement (150) par l'intermédiaire dudit au moins une unité de distribution (110, 160), et dans lequel, dans un cadre, une version en temps réel d'un composant logiciel sur le matériel cible (100) et, parallèlement à celle-ci dans le temps, une version de simulation étendue du composant logiciel sur le système de développement (150) sont fournies avec les mêmes données d'entrée et mises à exécution, les signaux d'activation pour le démarrage des exécutions des deux composants logiciels étant déclenchés au même *tick* de l'heure globale creux, et la version de simulation étendue du composant logiciel exécuté dans le système de développement (150) étant étendue de telle sorte que pendant son exécution, des résultats intermédiaires sélectionnés sont écrits dans une mémoire de données externe.

2. Procédé selon la revendication 1, **caractérisée en ce que** les résultats de l'exécution de la version en temps réel du composant logiciel sont transportés vers un processus en aval sur le matériel cible et, parallèlement à celui-ci, par l'intermédiaire d'une unité de distribution vers le système de développement.

3. Procédé selon la revendication 1 ou 2, **caractérisée en ce qu'**un processus dans le système de développement (150) vérifie si les résultats de l'exécution de la version en temps réel du composant logiciel répondent aux exigences données et, si une erreur est détectée, produit un message d'erreur.

4. Procédé selon l'une quelconque des revendications 1 à 3, **caractérisée en ce qu'**un processus dans le système de développement (150) vérifie si les résultats de l'exécution de la version en temps réel du composant logiciel sont identiques aux résultats de l'exécution de la version de simulation étendue du composant logiciel sur le système de développement en parallèle dans le temps et, si une déviation des deux résultats l'un par rapport à l'autre est détectée, produit un message d'erreur.
